# EUROPÄISCHE PATENTSCHRIFT

(11) **EP 3 014 974 B1**
(45) Veröffentlichungstag und Bekanntmachung des Hinweises auf die Patenterteilung: **29.08.2018**
(21) Anmeldenummer: 15188904.5
(22) Anmeldetag: 08.10.2015
(51) Int. Cl.: A01D 43/10

(54) **MÄHMASCHINE**
MOWING MACHINE
FAUCHEUSE

(30) Priorität: 31.10.2014 DE 102014016210
(43) Veröffentlichungstag der Anmeldung: 04.05.2016
(73) Patentinhaber: PÖTTINGER Landtechnik GmbH, 4710 Grieskirchen (AT)
(72) Erfinder: Ackermann, Stephan, 4710 Grieskirchen (AT); Kreupl, Walter, 4676 Aistersheim (AT)
(74) Vertreter: Thoma, Michael

(56) Entgegenhaltungen:
- EP-A1- 0 429 382
- EP-A1- 0 517 633
- EP-A1- 0 916 248
- EP-A1- 2 614 698
- DE-A1- 2 230 245
- DE-A1- 2 421 101
- FR-A1- 2 747 880
- GB-A- 2 000 952

## Beschreibung

Die vorliegende Erfindung betrifft eine Mähmaschine, mit zumindest einer Mähwerkseinheit, der ein Folgeaggregat zum Verarbeiten des von der Mähwerkseinheit geschnittenen Ernteguts nachgeordnet ist, wobei die Mähwerkseinheit von einem Antriebsstrang her antreibbar ist, der auf einer Seite der Mähwerkseinheit ein Eingangsgetriebe aufweist, an das die Schneidmittel der Mähwerkseinheit ankuppelbar sind, und wobei das Folgeaggregat durch Ankoppelung an den Antriebsstrang und/oder an die Mähwerkseinheit antreibbar ist.

Eine Mähmaschine nach dem Oberbegriff des Anspruchs 1 zeigt die Schrift FR 27 47 880 A, deren Mähwerkseinheit ein Konditionierer zugeordnet ist, der auf der Innenseite über einen Riementrieb von der Antriebswelle zum Antreiben der Mähwerkseinheiten angetrieben wird. Die DE 24 21 101 zeigt ebenfalls eine Mähmaschine mit einem nachgeordneten Konditionierer, wobei hier die Antriebswelle durch den Mähwerksträger hindurchgeführt ist, um über einer Riemenstufe auf der anderen Seite den Konditionierer anzutreiben. Ähnliche Konditioniererantriebe zeigen die Schriften GB 20 00 952 A und EP 0 517 633 A. Schließlich zeigt die EP 2 614 698 A eine Mähmaschine, deren Mähwerkseinheit unmittelbar ein Querförderer in Form einer Querförderschnecke nachgeordnet ist.

Bei Mähmaschinen werden den Mähwerkseinheiten regelmäßig Folgeaggregate zum Weiterverarbeiten des geschnittenen Ernteguts nachgeordnet. Solche Folgeaggregate können Querförderer in Form von Querförderbändern oder Querförderschnecken oder umlaufende Querrechen sein. Alternativ oder zusätzlich können den Mähwerkseinheiten auch Konditionierer nachgeordnet sein, die beispielsweise Quetschwalzen oder Klöppelschlagrotoren aufweisen können. Solche Folgeaggregate mit rotatorisch anzutreibenden Arbeitsaggregaten werden dabei antriebstechnisch gerne an den Antrieb der Mähwerkseinheiten angekoppelt, um keine eigenen Antriebe oder Antriebsstränge für das Folgeaggregat vorsehen zu müssen.

Solche mechanischen Antriebsstränge zum Antreiben der Mähwerkseinheit und des daran angekoppelten Folgeaggregats können üblicherweise an die Zapfwelle eines Schleppers angeschlossen werden, an den die als Anbaugerät ausgebildeten Mähmaschinen angebaut werden können. Die an die Schlepperzapfwelle ankuppelbare Antriebswelle wird dabei üblicherweise in ein Verteilergetriebe geführt, von dem Antriebswellen zu rechts und links angeordneten Mähwerkseinheiten abgehen, um dort ein Eingangsgetriebe anzutreiben, das üblicherweise an der Innenseite der Mähwerkseinheiten angeordnet ist und das Antriebsmoment bzw. die Antriebsbewegung in die jeweilige Mähwerkseinheit einleitet. Die dort vorgesehenen Schneidmittel, die beispielsweise Schneidrotoren mit daran gelagerten Messern aufweisen können, werden üblicherweise über Zahnradstufen angetrieben.

Der Antrieb der den Mähwerkseinheiten nachgeordneten Folgeaggregate kann dabei üblicherweise von den an der Innenseite der Mähwerkseinheiten vorgesehenen Eingangsgetrieben abzweigen und zu den in Fahrtrichtung nachlaufenden Folgeaggregaten nach hinten geführt sein, beispielsweise in Form einer Keilriemen- oder Antriebskettenstufe, über die der Rotor des jeweiligen Folgeaggregats angetrieben wird.

Derartige mechanische Antriebsstränge zum Antreiben der Mähwerkseinheit und des daran angekoppelten Folgeaggregats sind zwar vom Wirkungsgrad her sehr effizient sowie einfach und stabil aufgebaut und damit langlebig und wartungsarm. Allerdings kommt es im Bereich der Verzweigung des Antriebsstrangs, die zu dem Folgeaggregat führt, zu Platzproblemen. Einerseits ist der Ein- und Ausbau der Antriebswelle, die zu dem Eingangs- bzw. Verzweigungsgetriebe führt, nicht ganz einfach, da es hier zu Kollisionen mit dem zum Folgeaggregat abzweigenden Antriebsstrang in Form des Riementriebs und dessen Scheiben kommt. Zum anderen bleibt an dem genannten Eingangs- und Verteilergetriebe und dem hiervon abzweigenden Riementrieb, der zu dem Folgeaggregat führt, bei heckseitig anbaubaren Mähwerkseinheiten oft der Erntegutschwad hängen, der vom Frontmähwerk kommt. Üblicherweise wird vom Frontmähwerk ein größerer Mittenschwad abgelegt, der mit der genannten Verzweigung des Antriebsstrangs zum Folgeaggregat kollidiert. Insbesondere kollidert das genannte Eingangs- und Verteilergetriebe und der hiervon abzweigende Riementrieb zum Folgeaggregat auch mit dem abzulegenden Erntegut, wenn das Folgeaggregat als Querförderer ausgebildet ist. Beispielsweise will eine Querförderschnecke an sich dort ablegen, wo die genannte Ankoppel-Antriebsstufe liegt, so dass spezielle Leitmittel zum Ablegen des quergeförderten Ernteguts notwendig sind oder die Riemenstufe einen umgeleiteten Verlauf nehmen muß, was zu mehr Teilen und komplizierterem Aufbau der Riemenstufe führt.

Es wurde insofern bereits angedacht, das Folgeaggregat nicht mehr durch mechanische Ankoppelung an den Antriebsstrang zum Antreiben der Mähwerkseinheit anzutreiben, sondern einen hydraulischen Antrieb für das Folgeaggregat vorzusehen, dessen Energieversorgungsleitungen einfacher verlegbar sind, um der genannten Platz- und Kollisionsproblematik zu entgehen. Allerdings leidet hierunter die Effizienz bzw. der Wirkungsgrad des Antriebsstrangs.

Der vorliegenden Erfindung liegt daher die Aufgabe zugrunde, eine verbesserte Mähmaschine der genannten Art zu schaffen, die Nachteile des Standes der Technik vermeidet und Letzteren in vorteilhafter Weise weiterbildet. Insbesondere soll ein effizienter, einfach aufgebauter Antrieb für das Folgeaggregat geschaffen werden, der hinsichtlich Erntegutkollisionen und Platzbedarf vorteilhaft ist und eine einfache Zugänglichkeit zu Wartungszwecken ermöglicht.

Erfindungsgemäß wird die genannte Aufgabe durch eine Mähmaschine gemäß Anspruch 1 gelöst. Bevorzugte Ausgestaltungen der Erfindung sind Gegenstand der abhängigen Ansprüche.

Es wird also vorgeschlagen, die Mähwerksseite, an der das Eingangsgetriebe des Antriebsstrangs in die Mähwerkseinheit führt, dadurch zu verschlanken, dass hier nicht auch noch der Antriebsstrang für das Folgeaggregat abzweigt. Das Eingangsgetriebe in die Mähwerkseinheit und die Ankoppelung des Folgeaggregats an die Antriebsbewegung der Mähwerkseinheit werden auf verschiedenen Seiten der Mähwerkseinheit angeordnet. Erfindungsgemäß ist der Antriebsstrang von der Seite des Eingangsgetriebes auf eine andere Seite der Mähwerkseinheit geführt, wobei auf dieser anderen Seite ein mit dem Antriebsstrang verbundenes Koppelgetriebe zum Antreiben des Folgeaggregats vorgesehen ist. Durch die Aufteilung der Eingangs- und Koppelgetriebe auf verschiedene Seiten der Mähwerkseinheit kann die gegenseitige Platzbeeinträchtigung vermieden und die Zugänglichkeit zu Wartungszwecken deutlich verbessert werden. Zudem reduziert die hierdurch erzielte Verschlankung auf der Innenseite der Mähwerkseinheit die Problematik der Kollision mit bereits geschnittenem Erntegut. Auch die Bodenfreiheit auf der Mähwerksinnenseite in der Transportstellung wird verbessert.

Insbesondere kann eine Aufteilung der genannten Eingangs- und Koppelgetriebe auf gegenüberliegende Seiten der Mähwerkseinheit vorgesehen und vorzugsweise derart getroffen sein, dass das Eingangsgetriebe, das das Antriebsmoment bzw. die Antriebsbewegung in die Mähwerkseinheit einleitet und deren Schneidmittel antreibt, an einer Innenseite der Mähwerkseinheit und das zum Folgeaggregat abzweigende Koppelgetriebe auf einer Außenseite der Mähwerkseinheit angeordnet ist. Die genannte Innenseite meint dabei die Seite der Mähwerkseinheit, die näher an der Spurmitte der Mähmaschine und/oder des die Mähmaschine führenden Schleppers liegt, während die Außenseite von der besagten Spurmitte weiter entfernt liegt. Durch eine solchermaßen beschaffene Aufteilung der Eingangs- und Koppelgetriebe auf gegenüberliegende Seiten kann der Antriebsstrang vom Schlepper her kommend in einfacher Weise zum Eingangsgetriebe der Mähwerkseinheit geführt werden. Das auf der Außenseite der Mähwerkseinheit liegende Koppelgetriebe zum nachgeordneten Folgeaggregat beeinträchtigt einen bereits zentral abgelegten Erntegutschwad nicht mehr.

Insbesondere wird auch der Gutablagebereich eines als Querförderer ausgebildeten Folgeaggregats nicht mehr behindert.

Das genannte Koppelgetriebe, durch das das Folgeaggregat antriebstechnisch an den Antrieb der Mähwerkseinheit angekoppelt wird, kann grundsätzlich verschieden ausgebildet sein und an die Ausbildung des Folgeaggregats angepasst sein. Eine vorteilhafte Ausbildung kann hierbei darin bestehen, dass das Koppelgetriebe eine Riemen- oder Kettentriebstufe umfasst, mittels derer zwei zueinander parallele, voneinander beabstandete Antriebsachsen bzw. damit verbundene Antriebselemente rotatorisch angetrieben werden können. Anstelle eines Riemens oder einer Kette kann auch ein anderes endlos umlaufendes Umlaufmittel Verwendung finden, beispielsweise in Form eines Seils oder Ähnliches.

Insbesondere kann das Koppelgetriebe ausgangs- bzw. abtriebsseitig ein Antriebsrad in Form einer Scheibe oder eines Ritzels zum Antreiben eines endlosen Umlaufmittels vorzugsweise in Form eines Riemens oder einer Kette aufweisen, welches endlose Umlaufmittel das Folgeaggregat antreibt, wobei das auf Folgeaggregatsseite vorgesehene Antriebsrad in Form einer Scheibe oder eines Ritzels direkt mit einem anzutreibenden Rotor des Folgeaggregats verbunden sein kann oder alternativ über eine weitere Untersetzungs- und/oder Übersetzungsstufe mittelbar an diesen Rotor angeschlossen sein kann, um die gewünschte Drehzahl bzw. Antriebsgeschwindigkeit des Folgeaggregats relativ zur Antriebsgeschwindigkeit der Mähwerkseinheit einstellen zu können.

Der von einer Seite der Mähwerkseinheit auf dessen gegenüberliegende Seite geführte Antriebsstrang kann grundsätzlich verschiedene Verläufe nehmen und Ausbildungen besitzen. Beispielsweise kann vorgesehen sein, dass der Antriebsstrang in Form einer Antriebswelle an den Schneidmitteln der Mähwerkseinheit vorbei geführt ist, beispielsweise in Form einer an der Oberseite und/oder auf der Außenseite der Mähwerkseinheit entlang geführten Antriebswelle. Eine solche Antriebswelle würde die Antriebsritzel und Antriebselemente zum Antreiben der Mähwerkstrommeln bzw. der Schneidmittel sozusagen überbrücken.

Vorteilhafterweise kann der Antriebsstrang zwischen den gegenüberliegenden Seiten der Mähwerkseinheit in alternativer Weiterbildung der Erfindung zumindest teilweise aber auch von den Antriebselementen, die die Schneidmittel der Mähwerkseinheit, insbesondere deren Mähtrommeln antreiben, gebildet sein. Insbesondere kann der Antriebsstrang, der zum Koppelgetriebe auf der gegenüberliegenden Seite der Mähwerkseinheit führt, in die Mähwerkseinheit und deren Antriebsstrang integriert sein und/oder durch die Mähwerkseinheit hindurch führen.

Beispielsweise kann der genannte Antriebsstrang zwischen den Eingangs- und Koppelgetrieben auf den gegenüberliegenden Seiten der Mähwerkseinheit zumindest teilweise von miteinander kämmenden Ritzeln und/oder aufeinander abrollenden Antriebsrädern, über die die Schneidwerkstrommeln angetrieben werden, gebildet sein. Das Koppelgetriebe zum Ankoppeln des Folgeaggregats greift insbesondere die Antriebsbewegung eines an die genannte gegenüberliegende Seite angrenzenden, letzten Antriebsrads zum Antreiben der letzten Mähtrommel ab und koppelt das Folgeaggregat an dessen Antriebsbewegung an. Insbesondere kann das Koppelgetriebe zum Antreiben des Folgeaggregats die Antriebsbewegung der äußersten Mähwerkstrommel, die am nächsten zur Außenseite der Mähwerkseinheit liegt, abgreifen.

Die zumindest eine Mähwerkseinheit ist gemäß der Erfindung an einem Tragarm gelagert, mittels dessen die Mähwerkseinheit zwischen einer Arbeitsstellung und einer Transportstellung verschwenkt werden kann, wobei ein Verschwenken zwischen einer abgesenkten, seitlich auskragenden Arbeitsstellung und einer oben liegenden Transportstellung um eine liegende, in Fahrtrichtung weisende Schwenkachse vorgesehen ist.

Umfasst die Mähmaschine zwei in Arbeitsstellung zu gegenüberliegenden Seiten hin auskragende Mähwerkseinheiten, kann der Antriebsstrang vom Schlepper her kommend - insbesondere in Form einer an die Schlepperzapfwelle ankuppelbaren Antriebswelle - zunächst in ein Verteilergetriebe führen, das an einem Rahmen und/oder Anbaubock der Mähmaschine zwischen den Innenseiten der beiden Mähwerkseinheiten angeordnet ist. Das genannte Verteilergetriebe kann dann ausgangsseitig zwei nach rechts und links zu den Mähwerkseinheiten führende Antriebswellen umfassen, um über Eingangsgetriebe an den Innenseiten der Mähwerkseinheiten deren Schneidmittel anzutreiben. Jeweils an den Außenseiten der genannten Mähwerkseinheiten können dann die genannten Koppelgetriebe vorgesehen sein, um die nachgeordneten Folgeaggregate anzutreiben.

Die Mähmaschine kann hierbei sowohl als Frontmähwerk als auch als Heckmähwerk ausgebildet sein.

Das zumindest eine Folgeaggregat kann hierbei grundsätzlich verschieden ausgebildet sein und umfasst erfindungsgemäß einen Querförderer, der als Querförderschnecke ausgebildet sein kann. Zusätzlich kann das zumindest eine Folgeaggregat auch einen Konditionierer umfassen. Unabhängig von der konkreten Ausbildung der Folgeaggregats kann die zuvor beschriebene Antriebsstrangausbildung speziell dann von Vorteil sein, wenn das Folgeaggregat einen rotatorisch anzutreibenden Arbeitsrotor aufweist, dessen Rotorachse in der Arbeitsstellung liegend quer zur Fahrtrichtung ausgerichtet sein kann. Allerdings kommen auch andere Folgeaggregate in Betracht, beispielsweise Querförderbänder mit rotatorischen Antriebsachsen, die sich liegend in Fahrtrichtung erstrecken, oder Konditioniererkreisel mit aufrechten Rotationsachsen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung einer Mähwerkseinheit einer Mähmaschine, die an einen nicht gezeigten Schlepper anbaubar ist, und
- Fig. 2:: eine ausschnittsweise Detailansicht des Koppelgetriebes zum Ankoppeln des Folgeaggregats an den Antrieb der Mähwerkseinheit an der Außenseite der Mähwerkseinheit.

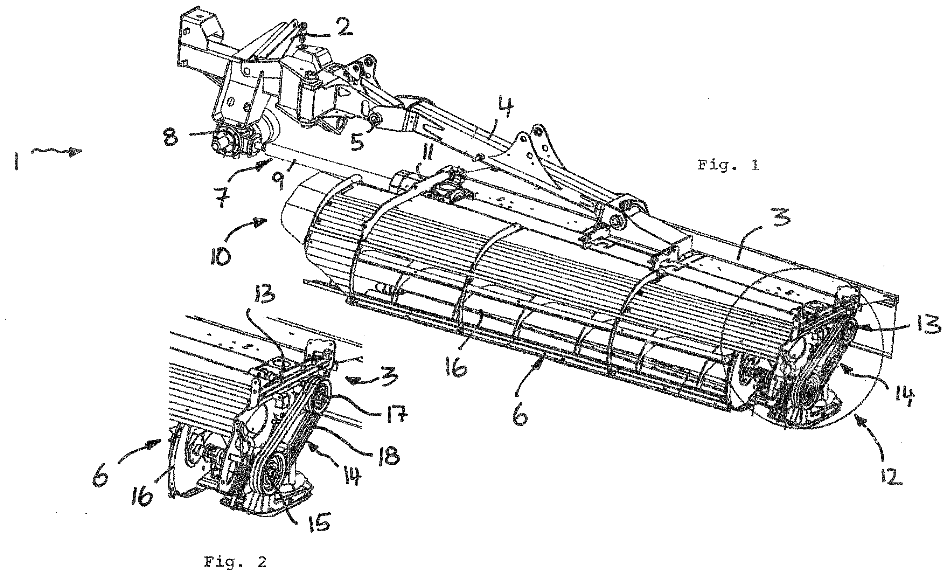

Wie Fig. 1 zeigt, kann die Mähmaschine 1 einen Anbaubock 2 oder eine andere geeignete Anbauvorrichtung umfassen, um an einen nicht eigens gezeigten Schlepper angebaut werden zu können, beispielsweise mittels einer an sich bekannten Dreipunktanlenkung mit Ober- und Unterlenkern. Die Mähmaschine 1 kann dabei heckseitig angebaut werden. Grundsätzlich kann jedoch auch ein frontseitiger Anbau an einen Schlepper vorgesehen sein.

Wie Fig. 1 zeigt, kann die Mähmaschine 1 dabei zumindest eine seitlich auskragend angeordnete Mähwerkseinheit 3 umfassen, die an einem Tragarm 4 aufgehängt sein kann, der vom Anbaubock 2 bzw. einem Maschinenrahmen seitlich quer zur Fahrtrichtung auskragen kann. Dabei kann eine Schwenkbarkeit des Tragarms 4 vorgesehen sein, beispielsweise um eine liegende, in Fahrtrichtung weisende Schwenkachse 5, um die Mähwerkseinheit 3 zusammen mit dem nachgeordneten Folgeaggregat 6 aus der in Fig. 1 gezeigten abgesenkten Arbeitsstellung in eine ausgehobene Vorgewende- und/oder Transportstellung ausheben bzw. zu verbringen können. Ein hierfür vorgesehener, nicht eigens gezeigter Hubaktor kann beispielsweise einen an den Tragarm 4 angelenkten Hydraulikzylinder umfassen.

Die Mähwerkseinheit 3 kann in an sich bekannter Weise mehrere um aufrechte Achsen rotierend antreibbare Schneidrotoren umfassen, an denen umfangsseitig Schneidmesser vorgesehen sind.

Zum Antreiben der Schneidmesser der Mähwerkseinheit 3 ist ein Antriebsstrang 7 vorgesehen, der beispielsweise an eine Schlepperzapfwelle angeschlossen werden kann und von dort kommend in ein Verteilergetriebe 8 geführt sein kann, das an dem Anbaubock 2 oder einem Maschinenrahmenteil im Bereich zwischen den beiden rechts und links angeordneten Mähwerkseinheiten 3 positioniert sein kann. Grundsätzlich wäre es aber auch denkbar, keinen direkten Anschluss an eine Schlepperzapfwelle vorzusehen, sondern beispielsweise einen hydraulischen oder elektrischen Antriebsmotor vorzusehen, der die Drehmoment- und Drehzahlquelle des genannten Antriebsstrangs bildet und beispielsweise vom Schlepper her mit Energie versorgbar ist.

Über das genannte Verteilergetriebe 8 kann der Antriebsstrang 7 beispielsweise über eine Antriebswelle 9 zur Innenseite 10 der Mähwerkseinheit 3 geführt sein, an der ein Eingangsgetriebe 11 vorgesehen sein kann, um die Antriebsbewegung des Antriebsstrangs 7 in die Mähwerkseinheit 3 einzuleiten. Die Antriebsbewegung kann hierbei in verschiedener Weise auf die Schneidrotoren verteilt werden, beispielsweise durch eine kaskadenartige Anordnung von ineinandergreifenden Antriebsritzeln, die reihenartig von Schneidrotor zu Schneidrotor führen und diese miteinander verbinden.

Auf der Außenseite 11 der Mähwerkseinheit 3 kann, wie Fig. 1 und Fig. 2 zeigen, ein Koppelgetriebe 13 vorgesehen sein, das eingangsseitig an den äußersten Schneidrotor angekuppelt ist, um dessen Antriebsbewegung abzugreifen. Ausgangsseitig treibt das Koppelgetriebe über eine Riemen- oder Kettenstufe 14 ein Eingangselement 15 des Folgeaggregats 6 an, wobei das genannte Eingangselement 15 insbesondere ein Ritzel oder eine Riemenscheibe sein kann. Wie Fig. 2 zeigt, koppelt die Riemenstufe 14 eine Ausgangsscheibe des Koppelgetriebes 13 an der Außenseite der Mähwerkseinheit 3 mit dem als Eingangsscheibe ausgebildeten Eingangselement 15 an der Außenseite des Folgeaggregats 6.

Das genannte Folgeaggregat 6 kann, wie die Figuren zeigen, eine Querförderschnecke umfassen, die um eine liegende, sich quer zur Fahrtrichtung erstreckende Rotorachse über die genannte Koppelgetriebestufe antreibbar ist.

Durch die Verlegung des Koppelgetriebes 13 auf die Außenseite der Mähwerkseinheit 3 und des Folgeaggregats 6 kann die genannte Querförderschnecke 16 auf der Innenseite des Folgeaggregats 6 störungsfrei das Erntegut ablegen.

## Patentansprüche

1. Mähmaschine, mit zumindest einer Mähwerkseinheit (3), der ein Folgeaggregat (6) zum Verarbeiten des von der Mähwerkseinheit (3) geschnittenen Ernteguts nachgeordnet ist, wobei die Mähwerkseinheit (3) von einem Antriebsstrang (7) her antreibbar ist, der auf einer Seite der Mähwerkseinheit (3) ein Eingangsgetriebe (11) aufweist, an das die Schneidmittel der Mähwerkseinheit (3) ankuppelbar sind, und wobei das Folgeaggregat (6) durch Ankoppeln an den Antriebsstrang (7) und/oder an die Mähwerkseinheit (3) antreibbar ist, wobei die zumindest eine Mähwerkseinheit (3) mittels eines Tragarms (4) um eine liegende, in Fahrtrichtung weisende Schwenkachse schwenkbar zwischen einer abgesenkten, seitlich auskragenden Arbeits- und einer oben liegenden Transportstellung an einem Anbaubock (2) und/oder einem Maschinenrahmenteil angelenkt ist, an dem ein Zwischen- und/oder Verteilergetriebe (8) vorgesehen ist, von dem her das an der Innenseite der Mähwerkseinheit (3) angeordnete Eingangsgetriebe (11) antreibbar ist, **dadurch gekennzeichnet, dass** das Folgeaggregat (6) einen Querförderer umfasst, wobei der Antriebsstrang (7) von der Seite des Eingangsgetriebes (11) auf eine andere Seite der Mähwerkseinheit (3) geführt ist und an der genannten anderen Seite ein mit dem Antriebsstrang (7) verbundenes Koppelgetriebe (13) zum Antreiben des Querförderers (6) vorgesehen ist.

2. Mähmaschine nach dem vorhergehenden Anspruch, wobei die Eingangs- und Koppelgetriebe (11, 13) auf gegenüberliegenden Seiten der Mähwerkseinheit angeordnet sind.

3. Mähmaschine nach einem der vorhergehenden Ansprüche, wobei das Eingangsgetriebe (11) an einer Innenseite (10) der Mähwerkseinheit (3) und das Koppelgetriebe (13) an einer Außenseite (12) der Mähwerkseinheit (3) angeordnet ist, wobei die Innenseite (10) näher an der Spurmitte der Mähmaschine (1) und/oder eines mit der Mähmaschine (1) verbundenen Schleppers als die Außenseite (12) liegt.

4. Mähmaschine nach einem der vorhergehenden Ansprüche, wobei das Koppelgetriebe (13) ausgangs- oder abtriebsseitig ein Antriebsrad (17) in Form einer Scheibe oder eines Ritzels zum Antreiben eines endlosen Umlaufmittels (18) in Form eines Riemens oder einer Kette aufweist, welches endlose Umlaufmittel das Folgeaggregat (6) antreibt.

5. Mähmaschine nach einem der vorhergehenden Ansprüche, wobei der Antriebsstrang zwischen Eingangs- und Koppelgetriebe (11, 13) einen integralen Teil der Antriebsbaugruppen zum Antreiben von Schneidmitteln der Mähwerkseinheit (3) bildet.

6. Mähmaschine nach einem der vorhergehenden Ansprüche, wobei der Antriebsstrang (7) zwischen den Eingangs- und Koppelgetrieben (11, 13) zumindest teilweise von miteinander kämmenden Zahnrädern oder aufeinander abrollenden Scheiben zum Antreiben von Schneidrotoren der Mähwerkseinheit (3) gebildet ist.

7. Mähmaschine nach einem der vorhergehenden Ansprüche, wobei der Antriebsstrang (7) zwischen dem Eingangsgetriebe (11) und einer Drehmomentquelle eine Antriebswelle (9) umfasst, die mit einer Eingangsseite des Eingangsgetriebes (11) drehmomentübertragend verbindbar ist.

8. Mähmaschine nach einem der vorhergehenden Ansprüche, wobei zusätzlich zu der zumindest einen Mähwerkseinheit (3) zumindest eine weitere Mähwerkseinheit vorgesehen ist, der ein weiteres Folgeaggregat zugeordnet ist, wobei die beiden Mähwerkseinheiten (3) nebeneinander angeordnet sind und der Antriebsstrang (7) ein zwischen den Mähwerkseinheiten (3) vorgesehenes Verteilergetriebe (8) umfasst, an das jeweils ein Eingangsgetriebe (11) auf jeder Innenseite der beiden Mähwerkseinheiten (3) angekuppelt ist, wobei jede der beiden Folgeaggregate durch jeweils ein Koppelgetriebe (13) antreibbar ist, das auf den Außenseiten der jeweiligen Mähwerkseinheit (3) vorgesehen ist.

9. Mähmaschine nach einem der vorhergehenden Ansprüche, wobei das Folgeaggregat (6) zumindest einen Arbeitsrotor mit einer in Arbeitsstellung liegenden, sich quer zur Fahrtrichtung erstreckenden Rotationsachse aufweist.

10. Mähmaschine nach einem der vorhergehenden Ansprüche, wobei der Querförderer in Form eines Querschneckenförderer mit einer Querförderschnecke ausgebildet ist.

11. Mähmaschine nach einem der vorhergehenden Ansprüche, wobei das Folgeaggregat (6) zumindest einen Konditionierer mit einem Konditionierrotor umfasst.

## Claims

1. A mowing machine, comprising at least one mowing unit (3), with a downstream unit (6) for processing harvested material cut by the mowing unit (3) arranged downstream said mowing unit, wherein the mowing unit (3) can be driven from a drive train (7), which at one side of the mowing unit (3) comprises an input transmission (11), to which the cutting elements of the mowing unit (3) can be coupled, and wherein the downstream unit (6) can be driven by being coupled to the drive train (7) and/or to the mowing unit (3), wherein the at least one mowing unit (3) is hinged, by means of a support arm (4), in a manner to be pivotable about a horizontal pivot axis facing the direction of travel between a lowered, laterally protruding operating position and an upper transport position, on an attachment block (2) and/or a machine frame portion, on which an intermediate and/or transfer gearbox (8) is provided, from which the input transmission (11) arranged at the interior side of the mowing unit (3) can be driven, **characterized in that** the downstream unit (6) includes a transversal conveyor, wherein the drive train (7) is guided from the side of the input transmission (11) to another side of the mowing unit (3) and a coupling transmission (13), connected to the drive train (7), for driving the transversal conveyor (6) is provided at the said other side.

2. A mowing machine according to the preceding claim, wherein the input and coupling transmissions (11, 13) are arranged on opposite sides of the mowing unit.

3. A mowing machine according to one of the preceding claims, wherein the input transmission (11) is arranged at an interior side (10) of the mowing unit (3) and the coupling transmission (13) is arranged at an external side (12) of the mowing unit (3), wherein the internal side (10) is located closer to the center of the lane of the mowing machine (1) and/or a tractor connected to the mowing machine (1) than the external side (12).

4. A mowing machine according to one of the preceding claims, wherein the coupling transmission (13) comprises, at the output side or drive side, a drive wheel (17) in the form of a disk or a pinion for driving a continuous rotating element (18) in the form of a belt or a chain, which continuous rotating element drives the downstream unit (6).

5. A mowing machine according to one of the preceding claims, wherein the drive train forms, between input and coupling transmission (11, 13), an integral part of the drive assemblies for driving cutting elements of the mowing unit (3).

6. A mowing machine according to one of the preceding claims, wherein the drive train (7) is formed, between the input and coupling transmission (11, 13), at least partially by intermeshing gears or disks rolling-off from on one another for driving the mowing unit (3).

7. A mowing machine according to one of the preceding claims, wherein the drive train (7) includes a drive shaft (9) between the input transmission (11) and a torque source, which shaft is connectable to an input side of the input transmission (11) in a torque-transmitting manner.

8. A mowing machine according to one of the preceding claims, wherein in addition to the at least one mowing unit (3), at least one further mowing unit is provided, which is assigned a further downstream unit, wherein the two mowing units (3) are arranged next to one another and the drive train (7) includes a transfer gearbox (8) provided between the mowing units (3), to which in each case one input transmission (11) can be coupled on each interior side of the two mowing units (3), wherein each of the two downstream units can be driven by in each case one coupling transmission (13), which is provided at the external sides of the respective moving unit (3).

9. A mowing machine according to one of the preceding claims, wherein the downstream unit (6) comprises at least one operating rotor having an axis of rotation horizontal in the operating position and extending transversally to the direction of travel.

10. A mowing machine according to one of the preceding claims, wherein the transversal conveyor is formed in the form of a transversal screw conveyor having a transversal conveyor screw.

11. A mowing machine according to one of the preceding claims, wherein the downstream unit (6) includes at least one conditioner with a conditioner rotor.

## Revendications

1. Faucheuse comprenant au moins une unité de faucheuse (3) en aval de laquelle est disposée un mécanisme suiveur (6) destiné à transformer le produit de récolte coupé par l'unité de faucheuse (3), l'unité de faucheuse (3) étant entraînée depuis une ligne d'entraînement (7) qui présente un engrenage d'entrée (11) sur un côté de l'unité de faucheuse (3), auquel engrenage les moyens de coupe de l'unité de faucheuse (3) peuvent être couplés, et le mécanisme suiveur (6) pouvant être entraîné par accouplement à la ligne d'entraînement (7) et/ou à l'unité de faucheuse (3), l'au moins une unité de faucheuse (3) étant articulée, au moyen d'un bras de support (4), autour d'un axe de pivotement horizontal, dirigé en direction de marche, pivotant entre une position de travail abaissée, faisant saillie latéralement, et une position de transport supérieure horizontale, sur une tête d'attelage (2) et/ou sur une pièce de cadre de machine sur laquelle est ménagé un mécanisme intermédiaire et/ou un boîtier de transfert (8) à partir duquel l'engrenage d'entrée (11) disposé sur le côté intérieur de l'unité de faucheuse (3) peut être entraîné, **caractérisée en ce que** le mécanisme suiveur (6) comprend un convoyeur transversal, la ligne d'entraînement (7) étant guidée du côté de l'engrenage d'entrée (11) vers un autre côté de l'unité de faucheuse (3), et un engrenage de couplage (13) raccordé à la ligne d'entraînement (7) étant ménagé sur ledit autre côté pour entraîner le convoyeur transversal (6).

2. Faucheuse selon la revendication précédente, l'engrenage d'entrée et l'engrenage de couplage (11, 13) étant disposés sur des côtés opposés de l'unité de faucheuse.

3. Faucheuse selon l'une quelconque des revendications précédentes, l'engrenage d'entrée (11) étant disposé sur un côté intérieur (10) de l'unité de faucheuse (3), et l'engrenage de couplage (13) étant disposé sur un côté extérieur (12) de l'unité de faucheuse (3), le côté intérieur (10) étant plus proche du centre de voie de la faucheuse (1) et/ou d'un tracteur raccordé à la faucheuse (1) que le côté extérieur (12).

4. Faucheuse selon l'une quelconque des revendications précédentes, l'engrenage de couplage (13) présentant, côté sortie ou prise de force, une roue motrice (17) sous forme d'un disque ou d'un pignon destiné à entraîner un moyen de circulation (18) sans fin sous forme d'une courroie ou d'une chaîne, lequel moyen de circulation sans fin entraîne le mécanisme suiveur (6).

5. Faucheuse selon l'une quelconque des revendications précédentes, la ligne d'entraînement formant entre l'engrenage d'entrée et l'engrenage de couplage (11, 13) une pièce intégrale de l'ensemble d'entraînement, destinée à entraîner des moyens de coupe de l'unité de faucheuse (3).

6. Faucheuse selon l'une quelconque des revendications précédentes, la ligne d'entraînement (7), entre l'engrenage d'entrée et l'engrenage de couplage (11, 13), étant formée au moins en partie par des roues dentées s'engrenant les unes dans les autres ou par des disques roulant les uns sur les autres pour entraîner des rotors de coupe de l'unité de faucheuse (3).

7. Faucheuse selon l'une quelconque des revendications précédentes, la ligne d'entraînement (7) comprenant entre l'engrenage d'entrée et l'engrenage de couplage (11, 13) un arbre moteur (9) qui peut être raccordé à un côté d'entrée de l'engrenage d'entrée (11) par transmission de couple.

8. Faucheuse selon l'une quelconque des revendications précédentes, au moins une unité de faucheuse supplémentaire étant ménagée en plus de l'au moins une unité de faucheuse (3), à laquelle est associé un mécanisme suiveur supplémentaire, les deux unités de faucheuses (3) étant disposées côte à côte et la ligne d'entraînement (7) comprenant un boîtier de transfert (8) ménagé entre les unités de faucheuse (3), sur lequel un engrenage d'entrée (11) est respectivement couplé sur chaque côté intérieur des deux unités de faucheuse (3), chacun des deux mécanismes suiveurs pouvant être respectivement entraîné par un engrenage de couplage (13) qui est ménagé sur les côtés extérieurs de l'unité de faucheuse (3) respective.

9. Faucheuse selon l'une quelconque des revendications précédentes, le mécanisme suiveur (6) présentant au moins un rotor de travail muni d'un axe de rotation horizontal en position de travail et s'étendant transversalement au sens de marche.

10. Faucheuse selon l'une quelconque des revendications précédentes, le convoyeur transversal étant réalisé sous forme d'un convoyeur à vis transversale comprenant une vis de transport transversale.

11. Faucheuse selon l'une quelconque des revendications précédentes, le mécanisme suiveur (6) comprenant au moins un conditionneur doté d'un rotor de conditionnement.
